# EUROPÄISCHE PATENTSCHRIFT

(11) **EP 1 659 572 B1**
(45) Veröffentlichungstag und Bekanntmachung des Hinweises auf die Patenterteilung: **26.12.2007**
(21) Anmeldenummer: 05022475.7
(22) Anmeldetag: 14.10.2005
(51) Int. Cl.: G10L 15/22, H04M 3/493

(54) **Verfahren zur Dialogsteuerung und danach arbeitendes Dialogsystem**
Dialogue control method and system operating according thereto
Méthode pour le contrôle de dialogue et système de dialogue l'utilisant

(30) Priorität: 18.11.2004 DE 102004056164
(43) Veröffentlichungstag der Anmeldung: 24.05.2006
(73) Patentinhaber: Deutsche Telekom AG, 53113 Bonn (DE)
(72) Erfinder: Van Ballegooy, Markus, Dipl. Phys., 10559 Berlin (DE)

(56) Entgegenhaltungen:
- EP-A- 1 076 329
- CA-A1- 2 375 589
- US-A1- 2002 133 347
- US-B1- 6 731 307
- HOLZAPFEL H ET AL: "Integrating emotional cues into a framework for dialogue management" MULTIMODAL INTERFACES, 2002. PROCEEDINGS. FOURTH IEEE INTERNATIONAL CONFERENCE ON 14-16 OCT. 2002, PISCATAWAY, NJ, USA,IEEE, 14. Oktober 2002 (2002-10-14), Seiten 141-146, XP010624307 ISBN: 0-7695-1834-6
- HARTWIG HOLZAPFEL: "Emotionen als Parameter der Dialogverarbeitung" DIPLOMARBEIT. INSTITUT FÜR LOGIK KOMPLEXITAT UND DEDUKTIONSSYSTEME., März 2003 (2003-03), XP002367310 Fakultät für Informatik Universität Karlsruhe (TH)
- ELISABETH ANDR¹ ET AL: "Endowing Spoken Language Dialogue Systems with Emotional Intelligence" TUTORIAL AND RESEARCH WORKSHOP AFFECTIVE DIALOGUE SYSTEMS, 14. Juni 2004 (2004-06-14), - 16. Juni 2004 (2004-06-16) Seiten 178-187, XP019007822 Kloster Irsee (Germany)
- ADDOLORATA CAVALLUZZI ET AL: "Affective Advice Giving Dialogs" PROCEEDINGS OF THE WORKSHOP ON AFFECTIVE DIALOGUE SYSTEMS ADS'04: LECTURE NOTES IN COMPUTER SCIENCE, 14. Juni 2004 (2004-06-14), - 16. Juni 2004 (2004-06-16) Seiten 77-88, XP019007847

## Beschreibung

Die Erfindung betrifft ein Verfahren zur Dialogsteuerung in automatischen Dialogsystemen. Sie bezieht sich weiterhin auf ein danach arbeitendes Dialogsystem. Insbesondere ist es nach dem vorgeschlagenen Verfahren und bei dem danach arbeitenden Dialogsystem vorgesehen, den Dialog unter Berücksichtigung des Dialogverhaltens einer das System benutzenden Person zu steuern und auf diese Weise das Dialogverhalten der betreffenden Person zu beeinflussen. Vorzugsweise ist das Verfahren beziehungsweise das Dialogsystem so ausgebildet, dass außerdem das Ergebnis dieser Einflussnahme auf den Dialogverlauf berücksichtigt und die Dialogstrategie hieran anpasst wird. Insoweit ist ein nach dem erfindungsgemäßen Verfahren arbeitendes Dialogsystem im Grunde einem Regelkreis vergleichbar. In einer speziellen Ausgestaltung bezieht sich die Erfindung auf Sprachdialogsysteme.

Automatische Dialogsysteme, welche eine Schnittstelle zwischen dem Menschen und einer Maschine ausbilden, sind seit längerem bekannt. Neben zeichenorientierten Dialogsystemen, bei denen der Nutzer den Dialog beispielsweise durch die Eingabe von Zeichen mittels einer Tastatur führt, sind seit längerem auch Sprachdialogsysteme bekannt. Solche Systeme, wie sie beispielsweise bei Telefonhotlines verwendet werden, basieren, was die Auswertung der von dem Benutzer eingegebenen Kommandos anbelangt, auf einer semantischen Sprachanalyse mittels vor allem Software-basierter Sprachanalyseeinheiten. Derartige Dialogsysteme sind jedoch im Allgemeinen nicht in der Lage, eventuelle Besonderheiten oder die konkreten Umstände eines von einem Nutzer mit dem System geführten Dialoges in angemessener Weise zu berücksichtigen.

Durch die DE 199 08 137 A1 sind ein Verfahren und eine Vorrichtung zur automatischen Steuerung eines Gerätes per Sprachdialog bekannt, mittels welcher zumindest die Art der Sprachausgabe, nämlich insbesondere die Intonation, in Abhängigkeit des jeweils von dem Nutzer gegebenen Sprachkommandos variiert wird. Dabei unterscheidet das beschriebene System zwischen handlungskritischen und nicht handlungskritischen Anweisungen. Sprachausgaben des Systems in Reaktion auf so genannte handlungskritische Anweisungen erfolgen mit einer besonders verstärkten Intonation und/oder mit erhöhter Lautstärke und/oder werden besonders hart beziehungsweise abrupt eingeblendet. Entsprechendes gilt, wenn das System den Nutzer in einer besonders kritischen Situation zur unbedingten Vornahme einer Handlung auffordert. Dabei ist die Einstufung von Handlungen als handlungskritisch oder nicht handlungskritisch durch das System aufgrund des semantischen Inhalts der Sprachkommandos des Benutzers vorgegeben Die in der Druckschrift dargestellte Lösung ermöglicht es eventuell noch auf fehlerhafte Anweisungen, nämlich Anweisungen, welche durch die Sprachanalyseeinheit nicht zuordenbar sind, durch eine mit geeigneter Intonation erfolgende Sprachausgabe zu reagieren und so auf den Fehler aufmerksam zu machen. Jedoch ist es mit der dargestellten Lösung nicht möglich, etwaige Unsicherheiten des Benutzers oder dessen eventuelle Verärgerung bei der Bedienung des Sprachdialogsystems zu erkennen und auf diese einzugehen oder gar das Dialogverhalten des Benutzers gezielt zu beeinflussen.

Aus der DE 195 33 541 C1 ist ein Sprachdialogsystem bekannt, welches bei Unsicherheiten in der Erkennung der Sprachkommandos versucht, den weiteren Dialog durch geeignete Rückfragen oder Anweisungen zu beeinflussen. Allerdings basiert auch dieses System auf einer rein semantischen Analyse der Spracheingaben des Nutzers. Auf Gefühlszustände, wie Ärger oder Wut, die beispielsweise aus Unsicherheiten des Benutzers beim Umgang mit dem System resultieren, kann auch das in dieser Schrift beschriebene Sprachdialogsystem nicht eingehen.

Auf der anderen Seite sind jedoch bereits auch Lösungen zur Feststellung beziehungsweise Bewertung emotionaler Zustände von Personen anhand ihrer sprachlichen Äußerungen bekannt geworden. Dabei erfolgt die Bewertung des emotionalen Zustands einer jeweiligen Person, wie beispielsweise durch die WO 99/31653 A1 beschrieben, auf der Grundlage einer prosodischen Klassifizierung der sprachlichen Äußerungen, insbesondere der Auswertung von Intonation, Stimmhöhe beziehungsweise Timbre des Sprachsignals. Die letztgenannte Schrift bezieht sich auf die Feststellung emotionaler Zustände von Personen im Zusammenhang mit der Realisierung von Lügendetektoren.

In der CA 2 375 589 A1 werden ein Verfahren und ein System zur Ermittlung der Zufriedenheit des Benutzers eines Sprachdialogsystems beschrieben. Danach wird die Zufriedenheit des Benutzers anhand seines, auf der Grundlage einer prosodischen Bewertung ermittelten Emotionszustandes eingeschätzt. Entsprechend dem ermittelten Emotionszustand passt das beschriebene System seine jeweilige Dialogantwort hinsichtlich der Art der Sprachausgabe an, wobei der Schrift keine näheren Aussagen darüber zu entnehmen sind, in welcher Form diese Anpassung erfolgt. Ausführungen zu einer semantischen Analyse der Benutzereingaben finden sich in der Schrift nicht.

Holzapfel, H. et al. zeigen in "Integrating Emotional Cues into a Framework for Dialogue Management", Proceedings of the Fourth IEEE International Conference on Multimodal Interface 2002, USA, IEEE, 14.10.2002 (ISBN 0-7695-1834-6), Seiten 141 - 146 die Möglichkeit auf, bei der sprachlichen Interaktion zwischen Mensch und Computer die semantische Analyse der menschlichen Sprachkommandos mit einer Bewertung des emotionalen Zustands des Benutzers zu kombinieren, um entsprechende Schnittstellen besser an die Bedürfnisse des Menschen zu adaptieren. Die Darstellung erfolgt in einer rein theoretischen Abhandlung anhand eines Modells. Vertiefende Aussagen beziehungsweise theoretische Abhandlungen dazu finden sich in einer unter dem Titel "Emotionen als Parameter der Dialogverarbeitung" vom vorstehend genannten Autor an der Fakultät für Informatik der Universität Karlsruhe (TH) verfassten und im März 2003 veröffentlichten Diplomarbeit.

Ferner setzen sich Elisabeth André et al. in "Endowing Spoken Language Dialogue Systems with Emotional Intelligence" (Tutorial and Research Workshop Affective Dialogue Systems, 14.06.2004 bis 16.06.2004, Seiten 178 -187) im Rahmen eines theoretischen Modells mit dieser Thematik auseinander. In der Arbeit wird vorgeschlagen, die Antworten eines Dialogsystems an den jeweils festgestellten emotionalen Zustand seines Benutzers anzupassen. Ein beispielhaft dargestelltes System ist insoweit flexibel, als es bezogen auf den Dialogkontext inhaltlich unterschiedliche Dialogantworten ausgibt, die hinsichtlich des vom System gewählten Dialogstils an eine diskrete Anzahl von möglichen Emotionszuständen des Benutzers angepasst sind. Die Anpassung an die jeweiligen Emotionszustände erfolgt dabei jedoch in immer gleicher Weise, ohne Berücksichtigung des Erfolgs vorangegangener Dialogantworten. Das heißt einem bestimmten Emotionszustand ist ein feststehender, sich nicht ändernder Dialogstil für die jeweils auszugebende Dialogantwort zugeordnet.

Aufgabe der vorliegenden Erfindung ist es, ein Verfahren und ein danach arbeitendes automatisches Dialogsystem anzugeben, welche es ermöglichen, den Verlauf eines Dialogs an das Verhalten beziehungsweise die Befindlichkeit eines Benutzers eines entsprechenden Dialogsystems anzupassen. Dabei besteht ein wesentliches Ziel der zu schaffenden Lösung darin, insbesondere ergebnislose Dialoge beziehungsweise Dialogabbrüche zu vermeiden.

Die Aufgabe wird durch ein Verfahren mit den Merkmalen des Hauptanspruchs gelöst. Ein danach arbeitendes automatisches Dialogsystem wird durch den ersten vorrichtungsbezogenen Anspruch charakterisiert. Vorteilhafte Ausbeziehungsweise Weiterbildungen der Erfindung sind durch die jeweiligen Unteransprüche gegeben.

Das vorgeschlagene Verfahren zur Dialogsteuerung bezieht sich auf automatische Dialogsysteme, bei denen der Dialog auf der Grundlage einer inhaltlichen Analyse von Dialogeingaben eines Benutzers des Dialogsystems, einer dabei ermittelten Entsprechung des Inhalts einer jeweiligen Dialogeingabe zu einem von mehreren für die Benutzung des Dialogsystems vorgegebenen Bedienkommandos und den jeweils entsprechenden Bedienkommandos im System zugeordneten, durch dieses an den Benutzer ausgegebenen Dialogantworten erfolgt. Dabei kann das System so konzipiert sein, dass auf jede Dialogeingabe, für die keine Entsprechung ermittelt werden kann, eine stereotype Dialogantwort ausgegeben wird.

Nach dem Verfahren erfolgt durch ein hierfür ausgebildetes Dialogsystem neben der inhaltlichen Analyse einer von dem System jeweils empfangenen Dialogeingabe auch deren Bewertung im Hinblick auf die Ermittlung eines augenblicklichen emotionalen Zustands des Benutzers. Erfindungsgemäß wird dann auf der Grundlage eines dabei gewonnenen Emotionsindikators mit Hilfe eines dafür im System hinterlegten Regelwerks eine Dialogstrategie ausgewählt und eine im Rahmen dieser Dialogstrategie für den jeweiligen Dialogschritt vorgesehene Dialogantwort generiert. Dabei ist das Verfahren so gestaltet, dass das System, im Falle dessen, dass der Benutzer aufgrund des Emotionsindikators als nicht emotional erregt gilt oder eine seinen emotionalen Zustand ignorierende Dialogstrategie gewählt wurde, eine mit dem aktuellen Dialogschritt und dem jeweils ermittelten Inhalt der Dialogeingabe des Benutzers korrespondierende Dialogantwort ausgibt, während andernfalls eine mit dem aktuellen Dialogschritt und dem Emotionsindikator korrespondierende Dialogantwort ausgegeben wird. Die Auswahl der jeweiligen Dialogstrategie erfolgt erfindungsgemäß mittels eines Zufallsgenerators, und zwar in Abhängigkeit des zuletzt ermittelten Emotionsindikators und unter Berücksichtigung einer den im Regelwerk enthaltenen Dialogstrategien zugeordneten Gewichtung. Erfindungsgemäß wird außerdem der Erfolg der jeweils gewählten Dialogstrategie im Rahmen der emotionalen Bewertung der auf die Ausgabe einer Dialogantwort folgenden Dialogeingabe des Benutzers durch einen Vergleich der jeweils ermittelten Emotionsindikatoren evaluiert und das Ergebnis dieser Evaluation zur Beeinflussung des Regelwerks genutzt. Sofern die zuletzt gewählte Dialogstrategie erfolgreich war, wird diese Strategie in ihrer Gewichtung erhöht oder aber, andernfalls, erniedrigt. Der Erfolg wird an der Veränderung des Emotionsindikators abgelesen. Vorzugsweise wird, bei einem beispielsweise zwischen 0 und 1 liegenden Indikator, eine starke Erregung durch einen hohen Indikatorwert und folglich eine niedrige Erregung mit einem niedrigen Wert, das heißt eine nicht messbare Erregung mit einem Wert von 0 oder nahe 0 gekennzeichnet. Sofern sich nun der Emotionsindikator von einem Dialogschritt zu nächsten verringert, wird die Strategie als erfolgreich angesehen und ihre Gewichtung gegebenenfalls erhöht. An dieser Stelle sei bemerkt, dass sowohl Einheiten zur inhaltlichen Analyse als auch Systeme zur Feststellung eines emotionalen Zustands, beispielsweise auf der Grundlage sprachlicher Äußerungen einer Person und deren semantischer und prosodischer Bewertung, grundsätzlich bekannt sind und daher als solches nicht Gegenstand der Erfindung sind. Vielmehr geht es vorliegend um die Idee, inhaltliche und emotionale Bewertung im Rahmen eines automatischen Dialogsystems zusammenzuführen und das zur Ableitung der Systemantwort verwendete Regelwerk durch die dargestellten Maßnahmen quasi "selbstoptimierend" zu gestalten.

Bei einer vorteilhaften Weiterbildung des erfindungsgemäßen Verfahrens werden außerdem der Verlauf des gesamten Dialogs sowie die in den einzelnen Dialogschritten ermittelten Emotionsindikatoren protokolliert und die während des Dialogs angewandten Dialogstrategien aufgrund des dabei festgestellten Verlaufs der emotionalen Erregung des Benutzers gewichtet.

Das Verfahren ist außerdem vorteilhaft so gestaltet, dass für jede im Regelwerk enthaltene Dialogstrategie eine minimale und eine maximale Gewichtung festgelegt werden. Hierdurch wird erreicht, dass keine Strategie durch die fortlaufenden Evaluationskorrekturen vollkommen verdrängt werden kann oder eine Strategie sich als einzige in einer Regel etabliert. Im Zuge einer Anfangsinitialisierung des Systems, also insbesondere bei dessen erstmaliger Inbetriebnahme, wird vorzugsweise für jede im Regelwerk enthaltene Dialogstrategie ein Anfangswert festgelegt.

Entsprechend einer vorteilhaften Ausgestaltung des erfindungsgemäßen Verfahrens wird, im Falle dessen, dass nach der Ausgabe einer Dialogantwort, welche nicht den Abschluss eines Dialoges bildet, innerhalb einer für das Dialogssystem festgelegten Dauer keine erneute Dialogeingabe des Benutzers registriert wird, ebenfalls eine stereotype Dialogantwort ausgegeben. Hierbei kann es sich, ebenso wie bei dem eingangs erwähnten Fall, dass eine Dialogeingabe überhaupt nicht beurteilbar ist-also vorzugsweise weder inhaltlich noch emotional - , um das Angebot zum Eintritt in einen Hilfe-Dialog oder um die unmittelbare Ausgabe von Hilfe-Informationen handeln.

In einer Ausbildung zur Dialogsteuerung in einem automatischen Sprachdialogsystem wird eine in Form einer sprachlichen Äußerung erfolgende Dialogeingabe des Benutzers zur Erschließung ihres Inhalts auf der Grundlage einer vorgegebenen Grammatik semantisch analysiert. Gleichzeitig erfolgt erfindungsgemäß durch eine prosodische Klassifizierung des Sprachsignals der Dialogeingabe die Bestimmung eines den jeweiligen emotionalen Zustand des Bedieners beziehungsweise Benutzers beschreibenden Emotionsindikators.

Zur Beschreibung des aus der sprachlichen Dialogeingabe abgeleiteten emotionalen Zustands wird vorzugsweise ein Emotionsindikator zwischen 0 und 1 festgelegt, wobei 0 einen Zustand ohne feststellbare emotionale Erregung und 1 einen Zustand sehr starker emotionaler Erregung kennzeichnet.

Ein nach dem erfindungsgemäßen Verfahren arbeitendes automatisches Dialogsystem umfasst, in zunächst bekannter Weise, eine oder mehrere Einheiten zur inhaltlichen Analyse von Dialogeingaben eines Benutzers, mindestens eine Inhaltsreferenzdatenbank, in welcher Bedienkommandos für das System oder zeichenbasierte Daten zu deren Auslösung in Relation zu für die Bedienung des Systems zugelassenen Inhalten von Dialogeingaben abgelegt sind, eine Vergleichereinheit, mittels welcher das Ergebnis der inhaltlichen Analyse der Dialogeingaben auf Entsprechungen zu einem Datensatz in einer der Inhaltsreferenzdatenbanken überprüft wird, eine Verarbeitungseinheit, zur Verarbeitung von aufgrund ermittelter Entsprechungen abgeleiteten Bedienkommandos und zur Generierung einer mit dem aktuellen Dialogschritt und dem jeweils ermittelten Inhalt der Dialogeingabe des Benutzers korrespondierenden Dialogantwort, sowie mindestens eine Einheit zur Ausgabe einer Dialogantwort Erfindungemäß umfasst es aber ferner:
a) eine Emotionsreferenzwertedatenbank,
b) Mittel zur Ableitung eines den augenblicklichen emotionalen Zustand des Benutzers beschreiben Emotionsindikators aus einer Dialogeingabe des Benutzers und unter Nutzung der Emotionsreferenzwertedatenbank,
c) eine Datenbank, in welcher ein Regelwerk zur Auswahl einer Dialogstrategie in Abhängigkeit von einem zu einer Dialogeingabe ermittelten Emotionsindikator und ein Gewichtungsfaktor für jede der nach dem Regelwerk auswählbaren Dialogstrategien hinterlegt sind,
d) eine Einheit (4) mit einem Zufallsgenerator, zur Strategieauswahl aus für den ermittelten Emotionsindikator im Regelwerk enthaltenen Dialogstrategien, welche in das vom Zufallsgenerator generierte Ergebnis mit einer durch ihren jeweiligen Gewichtungsfaktor bestimmten Eingangswahrscheinlichkeit eingehen, Dialogantwort, welche gegebenenfalls der vorstehend bereits genannten Verarbeitungseinheit sind,
e) Mittel zur Strategieausführung und Generierung einer im Rahmen der jeweils gewählten Dialogstrategie für den jeweiligen Dialogschritt vorgesehenen
f) einen Speicher zur Speicherung im Verlaufe eines Dialogs für den Benutzer ermittelter Emotionsindikatoren,
g) Mittel zur Evaluation des Erfolgs einer auf eine Dialogeingabe des Benutzers ausgewählten Strategie und zur Beeinflussung des Regelwerks in Abhängigkeit des Ergebnisses dieser Evaluation, durch einen Vergleich der im Verlauf des Dialogs ermittelten Emotionsindikatoren und eine Erhöhung oder Erniedrigung der Gewichtung einer Dialogstrategie auf der Grundlage des im Zuge des Vergleichs festgestellten Erfolgs ihrer Auswahl.

Bei einem erfindungsgemäß ausgebildeten automatischen Sprachdialogsystem sind, für die inhaltliche Analyse, eine Sprachanalyseeinheit und, für die Ableitung des Emotionsindikators, eine Einheit zur prosodischen Klassifizierung aus dem Sprachsignal einer Dialogeingabe vorgesehen. Letztere Einheit umfasst die entsprechende Emotionsreferenzwertedatenbank und eine auf diese für die prosodische Klassifizierung zurückgreifende Verarbeitungseinheit.

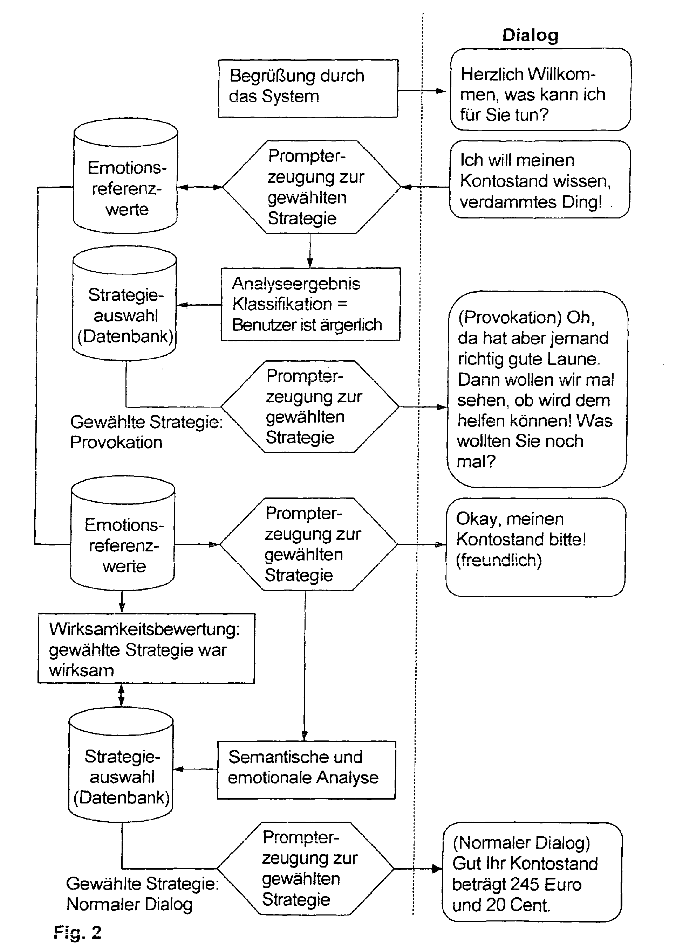

Die Erfindung soll anhand der Zeichnungen und der am Ende der Beschreibung angefügten Tabellen nochmals näher erläutert werden. Dabei beziehen sich insbesondere die Figur 2 und die Tabellen auf ein mögliches Ausführungsbeispiel des erfindungsgemäßen Verfahrens. Im Einzelnen zeigen:
- Fig. 1:: Ein grundsätzliches Schema zur Verdeutlichung der erfindungsgemäßen Lösung
- Fig. 2:: Ein beispielhaftes Ablaufschema, für einen Sprachdialog nach dem erfindungsgemäßen Verfahren

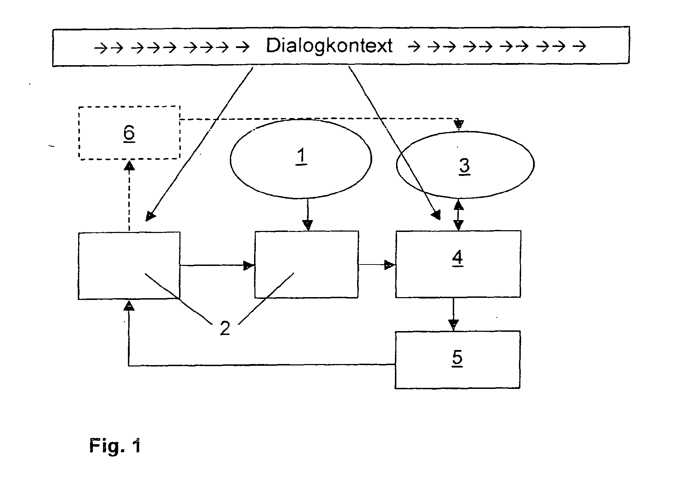

Die Fig. 1 verdeutlicht die erfindungsgemäße Lösung in einem grundsätzlichen Prinzipschema. Die Darstellung bezieht sich insbesondere auf den erfindungswesentlichen Aspekt einer vom jeweiligen emotionalen Status des Bedieners eines Dialogsystems abhängigen Dialoggestaltung. Die Einheiten zur inhaltlichen Bewertung beziehungsweise Analyse der Dialogeingabe sind in der Figur nicht dargestellt.

Wie zu erkennen ist, wird der die Dialogeingaben des Benutzers betreffende Teil des Dialogkontextes mit Hilfe einer Emotionsreferenzwertdatenbank 1 in einer zugehörigen Einheit 2 einer Analyse im Hinblick auf die Ermittlung des jeweiligen emotionalen Zustands des Benutzers unterzogen. In Abhängigkeit des daraus resultierenden Ergebnisses, eines den emotionalen Zustand des Benutzers repräsentierenden Emotionsindikators, wird durch das Systemmodul Strategiewahl 4 die vermeintlich günstigste Strategie für eine Dialogantwort auf eine Dialogeingabe des Benutzers ausgewählt. Die Strategieauswahl erfolgt mittels eines ebenfalls in einer Datenbank 3 hinterlegten Regelwerks, die Strategieausführung in der Ausführungseinheit 5. Entsprechend der ausgewählten Strategie wird der Dialog fortgeführt durch Ausgabe der sich aus der Dialogstrategie ergebenden Dialogantwort des Systems. In Fortführung des Dialogs wird der Benutzer hierauf mit einer weiteren Dialogeingabe zur Steuerung des Systems reagieren. Auch diese Dialogeingabe wird wiederum einer Analyse zur Ermittlung eines den emotionalen Zustand des Benutzers widerspiegelnden Emotionsindikators unterzogen. Gleichzeitig erfolgt durch das System mittels einer dazu vorgesehenen Bewertungseinheit 6 eine Evaluation der im vorausgegangenen Dialogschritt gewählten Strategie. Dabei wird überprüft, ob die vom System ausgegebene Dialogantwort zu einer Verringerung des emotionalen Erregungszustandes des Benutzers geführt hat. Sofern dies der Fall ist, kann die gewählte Strategie als wirksam eingestuft und eine ihr in der Datenbank 3 mit dem Regelwerk zugeordnete Gewichtung erhöht werden. Sofern die Evaluation erbringt, dass die gewählte Dialogstrategie nicht erfolgreich war, kann die Dialogstrategie, insbesondere dann, wenn sich dieses Ergebnis auch in früheren Dialogen häufiger gezeigt hat, in ihrem Bedeutungsgehalt zurückgestuft werden, das heißt die ihr zugeordnete Gewichtung herabgesetzt werden. Zur Art und Weise der Beeinflussung des Regelwerks sollen später noch einige Ausführungen erfolgen.

Anhand des in der Fig. 2 gegebenen Schemas soll in Verbindung mit den Tabellen ein konkretes Ausführungsbeispiel der Erfindung verdeutlicht werden.

Das Beispiel betrifft die Nutzung eines Sprachdialogsystems zur Bedienung eines Bankautomaten, wobei der mögliche Ablauf eines entsprechenden Dialoges insbesondere aus der Kombination der Fig. 2 und der Tabelle 1 deutlich wird. Die inhaltliche Analyse der Dialogeingaben des Benutzers erfolgt dabei mittels einer Spracherkennungseinheit des Sprachdialogsystems in welcher das Sprachsignal nach an sich bekannten Verfahren analysiert und semantisch bewertet wird. Zur Feststellung des emotionalen Zustands des Bedieners wird das Sprachsignal prosodisch, das heißt, hinsichtlich von Faktoren wie Intonation, Tonhöhe oder Tembre, analysiert. Ausgedrückt wird der dabei festgestellte emotionale Zustand durch einen Emotionsindikator, welcher Werte zwischen 0 und 1 annimmt, wobei 0 einen Zustand ohne erkennbare emotionale Erregung und 1 einen Zustand hoher emotionaler Erregung (beispielsweise Wut) anzeigt.

Im Beispiel sei zunächst angenommen, dass der Benutzer, aus nicht näher bekannten Gründen oder weil er mit dem Automaten beziehungsweise dem Dialogsystem nicht richtig zurechtkommt, verärgert ist. Beispielsweise zeigt sich dies durch eine Spracheingabe der Form: "Ich will meinen Kontostand wissen, verdammtes Ding!" Aufgrund der semantischen und der emotionalen Analyse beziehungsweise der prosodischen Klassifizierung dieses Sprachkommandos wird durch das System der Erregungszustand des Benutzers erkannt. Im Ergebnis der Analyse wird der Nutzer als ärgerlich klassifiziert. In dem Beispiel wird dann angenommen, dass in diesem Dialogschritt (Abruf des Kontostandes) für den Erregungszustand "ärgerlich" durch das Systemmodul Strategiewahl unter Berücksichtigung des dazu in der entsprechenden Datenbank enthaltenen Regelwerks eine Dialogantwort beziehungsweise ein Systemprompt folgender Form erzeugt wird: "Oh, da hat aber jemand richtig gute Laune. Dann wollen wir mal sehen, ob wir dem helfen können! Was wollten Sie noch mal?" Hierbei handelt es sich erkennbar um eine provozierende Dialogstrategie, wobei die Auswahl der Strategie und dieser Wahl zugrunde liegende Regel immer auch im Zusammenhang mit dem jeweils aktuellen Kontext stehen. In dem Beispiel wird nun angenommen, dass der Benutzer durch die vom System gewählte Strategie "Provokation" darauf aufmerksam gemacht wird, dass er in diesem Ton und ohne Verringerung seines Erregungszustandes möglicherweise nicht zum Erfolg kommt, er also sein mit dem Dialog angestrebtes Ziel nicht erreicht. Insoweit fährt er, auf sich selbst einwirkend, fort: "Okay, meinen Kontostand bitte!" Das System erkennt nun, dass sich der Erregungszustand des Benutzers verringert hat und dieser in freundlicher Art und Weise versucht, den Dialog fortzusetzen. Aufgrund dessen wählt das Modul Strategiewahl unter Berücksichtigung der Strategieregein der Datenbank die Strategie einer normalen Dialogfortführung aus. Es gibt dem Benutzer den Kontostand, beispielsweise in der Form: "Gut, Ihr Kontostand beträgt 245 Euro und 20 Cent.", aus. Die konkrete in Abhängigkeit von der gewählten Dialogstrategie ausgegebene Dialogantwort (Systemprompt) steht jeweils im Kontext zu dem aktuellen Dialogschritt.

Für die Wahl der Strategie auf die eingangs geschilderte ärgerliche Nachfrage des Benutzers können dem System unterschiedliche Dialogstrategien zur Verfügung stehen, wie sie beispielhaft für den zuvor dargestellten Kontext beziehungsweise Dialogschritt (Abruf des Kontostandes) durch Tabelle 1 verdeutlicht werden und in Form geeigneter Regeln in der zugehörigen Strategieregeldatenbank hinterlegt sind. Welche dieser möglichen Strategien durch das System gewählt wird, hängt dabei, wie bereits erläutert, auch davon ab, wie eine größere Zahl von Benutzern des Systems auf die jeweils gewählte Strategie reagiert, wobei dies im Zuge der Strategieevaluation ermittelt wird und, wie bereits dargestellt, eine einer jeweiligen Strategie in der Datenbank mit dem Regelwerk zugeordnete Gewichtung im Ergebnis dieser Überprüfung erhöht oder verringert wird.

In der Tabelle 2 ist beispielhaft ein mögliches Regelwerk für das hier betrachtete Ausführungsbeispiel veranschaulicht, bei welchem die Regeln aus einem Wenn-Teil (einer im Dialog gegebenenfalls eintretenden Bedingung) und einem Dann-Teil (Auswahl der Dialogstrategie) bestehen. Wie erkennbar, ist im Zusammenhang mit dem betrachteten Kontext eine größere Zahl möglicher Dialogstrategien für den Erregungszustand "Benutzer ist ärgerlich" gegeben. Die Auswahl der jeweils zur Anwendung kommenden Strategie erfolgt, mittels eines Zufallsgenerators aber unter Berücksichtigung der Gewichtung die der einzelnen Strategien. Dem Fachmann sind entsprechende Mittel zur Realisierung eines dafür geeigneten Zufallsgenerators bekannt. Softwaremäßig kann dies beispielsweise durch Generierung einer Zufallszahl in einem vorgegebenen Zahlenbereich geschehen, wobei jeder möglichen Dialogstrategie ein bestimmtes Werteintervall in diesem Zahlenbereich zugeordnet ist und diese Wertebereiche, zur Berücksichtigung der Gewichtungen der einzelnen Strategien unterschiedlich groß festgelegt werden. Das heißt, beispielsweise wird eine Zufallszahl zwischen 0 und 1 generiert und einer Strategie mit einer hohen Gewichtung innerhalb dieses Zahlenbereichs das Intervall zwischen 0 und 0,4 zugeordnet und einer weniger bedeutenden, also schlechter gewichteten Strategie, das Intervall zwischen 0,4 und 0,45 und so weiter.

Unmittelbar nach dem Einsatz einer Dialogstrategie erfolgt die Evaluation ihrer Wirksamkeit. Dies geschieht zum einen durch einen Vergleich der Emotionsindikatoren der aktuellen und der vorangegangen Dialogsituation. Liegt der aktuelle Emotionsindikator höher als der vorherige, so kann die Strategie nicht als unmittelbar wirksam erachtet werden. Ist aktuell ein geringerer Emotionsindikator festzustellen, so wird dies als Indiz für die Wirksamkeit der Dialogstrategie gewertet. Um auch mittelfristige Wirkungen angemessen berücksichtigen zu können (z.B. in Dialogkontexten, in denen aus inhaltlichen Gründen mit einem hohen Grundniveau negativer Emotionen und damit nicht mit einer unmittelbaren Wirkung einer Dialogstrategie zu rechnen ist) wird zusätzlich eine Evaluation am Ende des kompletten Dialoges vorgenommen. Hier werden dann als Wirksamkeitskriterien zusätzlich die Gesamtveränderung des Emotionsindikators im Dialog und die Dauer bis zum Eintreten einer emotionalen Veränderung, also die Entwicklung des Emotionsindikators im Verlauf des Dialogs berücksichtigt.

Anhand der genannten Bewertungskriterien wird die Stärke der Wirksamkeit einer Dialogstrategie für den Kontext ihrer aktuellen Anwendung klassifiziert. Dabei werden zum Beispiel 5 verschiedene Wirksamkeitsabstufungen vorgesehen (stark negative Wirkung, negative Wirkung, neutrale Wirkung, positive Wirkung und stark positive Wirkung). Selbstverständlich erfolgt die Evaluierung des Erfolgs einer Strategie, ebenso wie deren Auswahl immer im Zusammenhang mit dem jeweiligen Kontext.

Entsprechend dem Evaluationsergebnis für eine angewendete Strategie wird die Gewichtung beziehungsweise Eingangswahrscheinlichkeit für eine Auslösung im Dann-Teil der Auswahlregeln angepasst. Hat sich eine Strategie als besonders wirksam erwiesen, wird ihre Eingangswahrscheinlichkeit um einen entsprechend hohen Prozentwert erhöht, war sie unwirksam, wird ihre Gewichtung dementsprechend gesenkt. Die Regel wird dann im nächsten Dialogschritt mit dieser neuen Gewichtung berücksichtigt. Der Betrag der Veränderung der Wahrscheinlichkeiten wird jeweils den "konkurrierenden" Strategien zu gleichen Teilen zugeschlagen bzw. abgezogen. Für jede Strategie in einer Regel sind eine maximale und eine minimale Eingangswahrscheinlichkeit beziehungsweise Gewichtung festgelegt. Hierdurch wird erreicht, dass keine Strategie durch die fortlaufenden Evaluationskorrekturen vollkommen verdrängt werden kann (eine Gewichtung beziehungsweise Eingangswahrscheinlichkeit von 0% erhält) oder eine Strategie sich als einzige in einer Regel etabliert (Eingangswahrscheinlichkeit 100%). Dies ist sinnvoll, um auch hier eine Grundvariation im Strategiewahlverhalten aufrecht zu erhalten.

### Liste der verwendeten Bezugszeichen

- 1: Emotionsreferenzwertdatenbank
- 2: Verarbeitungseinheit zur Emotionsbewertung
- 3: Datenbank mit Regelwerk
- 4: Einheit zur Strategieauswahl
- 5: Einheit(en) zur Strategieausführung
- 6: Einheit zur Erfolgsanalyse

**Tabelle 1**

| Strategie | Beispielprompt |
|---|---|
| Ignorieren des emotionalen Zustandes und normales Fortfahren im Dialog | "Ihr Kontostand beträgt - 245 Euro und 20 Cent." |
| Ablenkung/Themenwechsel ohne explizites Eingehen auf die Emotionen | "Wie finden Sie den das Wetter heute?" |
| Informationsgabe (der Anrufer erhält Informationen, die ihn unter Umständen über irrtümliche Annahmen, die zu seinem negativen emotionalen Zustand geführt haben) | "Ihr Kontostand ist auffällig niedrig. In der letzten Woche ist ein größerer Betrag abgebucht worden! Wollen wir mal schauen, worum es da genau geht." |
| präzisierendes Nachfragen zum Ziel der differenzierten Analyse (diagnostische Fragen) | "Liege ich richtig, wenn Sie mir ein bisschen ärgerlich vorkommen." |
| Eingehen auf den emotionalen Zustand, durch | |
| Rückmeldung/Spiegelung | "Sie scheinen ja ziemlich ärgerlich zu sein!" |
| Empathische Äußerungen | "Tut mir leid, dass Sie sich so aufgeregt haben, wie kann ich Ihnen helfen." |
| Weitere Ermunterung des Nutzers dazu, seinen emotionalen Zustand zu artikulieren | "Sagen Sie mir doch bitte, was Sie so ärgerlich macht!" |
| Relativieren des emotionalen Zustandes | "So schlimm wird es doch schon nicht sein, dass Sie sich so aufregen müssen." |
| Anbieten von alternativen Verhaltensmöglichkeiten | "Vielleicht atmen Sie erst einmal tief durch, dann können wir danach in Ruhe über Ihren Kontostand reden." |
| Scherzen/Humor/leichte Provokation | "Oh, da hat aber jemand richtig gute Laune Dann wollen wir mal sehen, ob wir dem helfen können! Was wollten Sie noch mal?" |
| Vemunflappelle/Vermittlung von Bewältigungsmöglichkeiten | "Bitte beruhigen Sie sich, es macht keinen Sinn hier herum zu schreien!" |
| Zurückweisung des emotionalen Nutzerverhaltens | "Also, in dem Ton lasse ich nicht mit mir reden." |
| Eskalation des emotionalen Zustandes / Abreagieren | "Verdammt noch mal, wenn Sie mich hier so anschreien, kann ich locker mithalten, was ist den das für eine Art!" |
| Motivierende sprachliche Äußerungen | "Okay, wenn Sie sich ein wenig beruhigen, dann geht es gleich ganz schnell weiter." |
| Tröstende sprachliche Äußerungen | "Ich kann verstehen, dass Sie sauer werden, wenn es so langsam geht. Aber das kommt halt mal vor. Es ist gleich vorbei." |

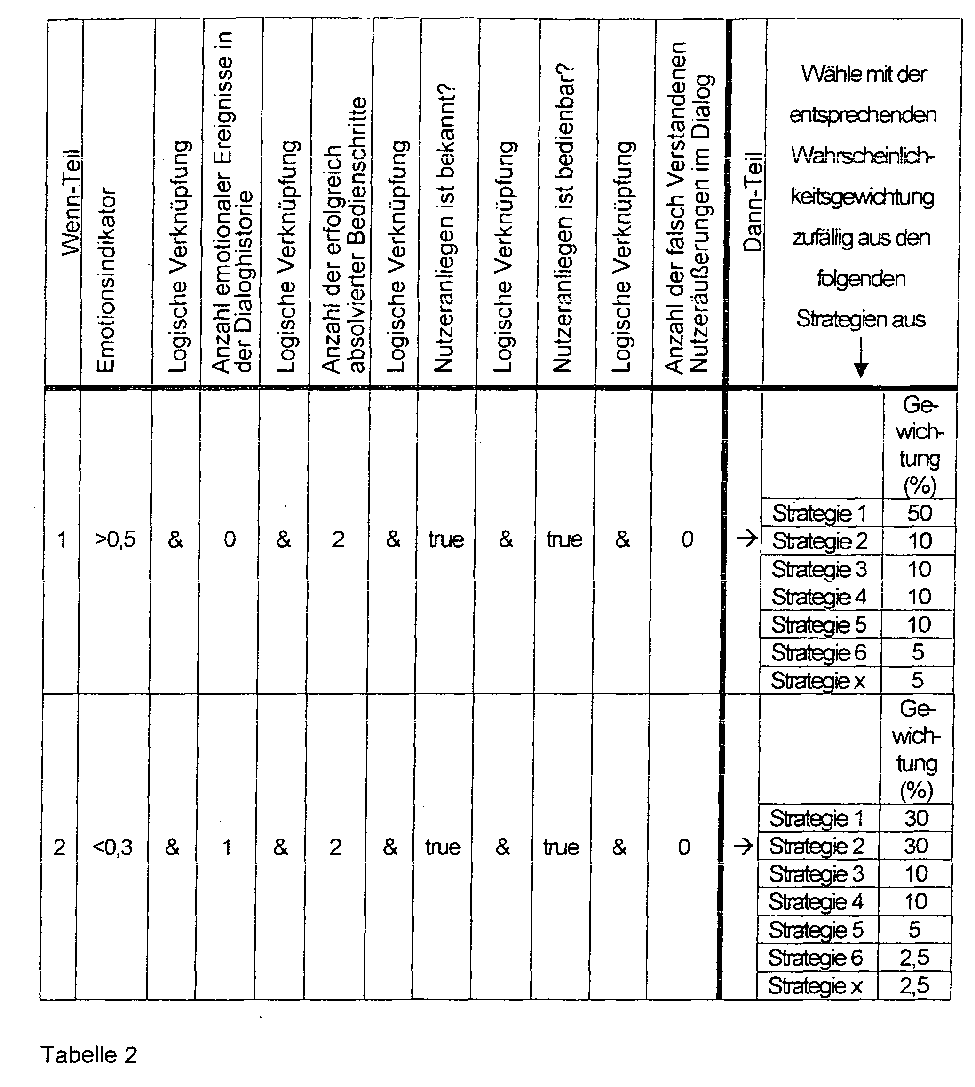

## Patentansprüche

1. Verfahren zur Dialogsteuerung in automatischen Dialogsystemen, bei denen der Dialog auf der Grundlage einer inhaltlichen Analyse von Dialogeingaben eines Benutzers des Dialogsystems, einer dabei ermittelten Entsprechung des Inhalts einer jeweiligen Dialogeingabe zu einem von mehreren für die Benutzung des Dialogsystems vorgegebenen Bedienkommandos und den jeweils entsprechenden Bedienkommandos im System zugeordneten, durch dieses an den Benutzer ausgegebenen Dialogantworten erfolgt, wobei gegebenenfalls auf jede Dialogeingabe, für die keine Entsprechung ermittelt werden kann, eine stereotype Dialogantwort ausgegeben wird, und wobei durch ein hierfür ausgebildetes Dialogsystem neben der inhaltlichen Analyse einer von dem System jeweils empfangenen Dialogeingabe deren Bewertung im Hinblick auf die Ermittlung eines augenblicklichen emotionalen Zustands des Benutzers erfolgt, **dadurch gekennzeichnet, dass** auf der Grundlage eines bei der Ermittlung des emotionalen Zustands gewonnenen Emotionsindikators mit Hilfe eines dafür im System hinterlegten Regelwerks eine Dialogstrategie gewählt und eine im Rahmen dieser Dialogstrategie für den jeweiligen Dialogschritt vorgesehene Dialogantwort ausgegeben wird, wobei im Falle dessen, dass der Benutzer aufgrund des Emotionsindikators als nicht emotional erregt gilt oder eine seinen emotionalen Zustand ignorierende Dialogstrategie gewählt wird, vom System eine mit dem aktuellen Dialogschritt und dem jeweils ermittelten Inhalt der Dialogeingabe des Benutzers korrespondierende Dialogantwort sowie andernfalls eine mit dem aktuellen Dialogschritt und dem Emotionsindikator korrespondierende Dialogantwort ausgegeben wird und wobei die Auswahl der jeweiligen Dialogstrategie, in Abhängigkeit des zuletzt ermittelten Emotionsindikators mittels eines Zufallsgenerators erfolgt, der die Dialogstrategie aus für diesen Emotionsindikator im Regelwerk enthaltenen Dialogstrategien auswählt, welche in das vom Zufallsgenerator generierte Ergebnis mit einer Wahrscheinlichkeit eingehen, die durch eine den Dialogstrategien im Regelwerk zugeordnete Gewichtung bestimmt ist und wobei ferner der Erfolg der jeweils gewählten Dialogstrategie im Rahmen der emotionalen Bewertung der auf die Ausgabe einer Dialogantwort folgenden Dialogeingabe des Benutzers durch einen Vergleich der jeweils ermittelten Emotionsindikatoren evaluiert sowie das Ergebnis dieser Evaluation zur Beeinflussung des Regelwerks genutzt wird, indem die zuletzt gewählte Dialogstrategie, sofern sie erfolgreich war, in ihrer Gewichtung erhöht oder, andernfalls, erniedrigt wird.

2. Verfahren nach Anspruch 1, **dadurch gekennzeichnet, dass** der Verlauf des gesamten Dialogs sowie die in den einzelnen Dialogschritten ermittelten Emotionsindikatoren protokolliert und die während des Dialogs angewandten Dialogstrategien aufgrund des dabei festgestellten Verlaufs der emotionalen Erregung des Benutzers gewichtet werden.

3. Verfahren nach Anspruch 1 oder 2, **dadurch gekennzeichnet, dass** für jede im Regelwerk enthaltene Dialogstrategie eine minimale und eine maximale Gewichtung festgelegt werden.

4. Verfahren nach einem der Ansprüche 1 bis 3, **dadurch gekennzeichnet, dass** im Zuge einer Anfangsinitialisierung des Systems für jede im Regelwerk enthaltene Dialogstrategie ein Anfangswert festgelegt wird.

5. Verfahren nach einem der Ansprüche 1 bis 4, **dadurch gekennzeichnet, dass** im Falle dessen, dass nach der Ausgabe einer Dialogantwort, welche nicht den Abschluss eines Dialoges bildet, innerhalb einer für das Dialogssystem festgelegten Dauer keine erneute Dialogeingabe des Benutzers registriert wird, ebenfalls eine stereotype Dialogantwort ausgegeben wird.

6. Verfahren nach Anspruch 1 oder 5, **dadurch gekennzeichnet, dass** es sich bei der stereotypen Dialogantwort um das Angebot zum Eintritt in einen Hilfe-Dialog oder um die unmittelbare Ausgabe von Hilfe-Informationen handelt.

7. Verfahren nach einem der Ansprüche 1 bis 6, zur Dialogsteuerung in einem automatischen Sprachdialogsystem, **dadurch gekennzeichnet, dass** der Inhalt einer in Form einer sprachlichen Äußerung erfolgten Dialogeingabe des Benutzers durch deren semantische Analyse festgestellt und der seinen jeweiligen emotionalen Zustand beschreibende Emotionsindikator durch eine prosodische Klassifizierung des Sprachsignals der Dialogeingabe bestimmt wird.

8. Verfahren nach Anspruch 7, **dadurch gekennzeichnet, dass** zur Beschreibung des aus der sprachlichen Dialogeingabe abgeleiteten emotionalen Zustands eines Benutzers des Sprachdialogsystems ein Emotionsindikator zwischen 0 und 1 festgelegt wird, wobei 0 einen Zustand ohne feststellbare emotionale Erregung und 1 einen Zustand sehr starker emotionaler Erregung kennzeichnet.

9. Automatisches Dialogsystem, mit einer oder mehreren Einheiten zur inhaltlichen Analyse von Dialogeingaben eines Benutzers, mindestens einer Inhaltsreferenzdatenbank, in welcher Bedienkommandos für das System oder zeichenbasierte Daten zu deren Auslösung in Relation zu für die Bedienung des Systems zugelassenen Inhalten von Dialogeingaben abgelegt sind, einer Vergleichereinheit, mittels welcher das Ergebnis der inhaltlichen Analyse der Dialogeingaben auf Entsprechungen zu einem Datensatz in einer der Inhaltsreferenzdatenbanken überprüft wird, einer Verarbeitungseinheit, zur Verarbeitung von aufgrund ermittelter Entsprechungen abgeleiteten Bedienkommandos und zur Generierung einer mit dem aktuellen Dialogschritt und dem jeweils ermittelten Inhalt der Dialogeingabe des Benutzers korrespondierenden Dialogantwort, sowie mindestens einer Einheit zur Ausgabe einer Dialogantwort, **dadurch gekennzeichnet, dass** das Dialogsystem aufweist
a) eine Emotionsreferenzwertedatenbank (1),
b) Mittel (2) zur Ableitung eines den augenblicklichen emotionalen Zustand des Benutzers beschreiben Emotionsindikators aus einer Dialogeingabe des Benutzers und unter Nutzung der Emotionsreferenzwertedatenbank (1),
c) eine Datenbank (3), in welcher ein Regelwerk zur Auswahl einer Dialogstrategie in Abhängigkeit von einem zu einer Dialogeingabe ermittelten Emotionsindikator und ein Gewichtungsfaktor für jede der nach dem Regelwerk auswählbaren Dialogstrategien hinterlegt sind,
d) eine Einheit (4) mit einem Zufallsgenerator, zur Strategieauswahl aus für den ermittelten Emotionsindikator im Regelwerk enthaltenen Dialogstrategien, welche in das vom Zufallsgenerator generierte Ergebnis mit einer durch ihren jeweiligen Gewichtungsfaktor bestimmten Eingangswahrscheinlichkeit eingehen,
e) Mittel (5) zur Strategieausführung und Generierung einer im Rahmen der jeweils gewählten Dialogstrategie für den jeweiligen Dialogschritt vorgesehenen Dialogantwort,
f) einen Speicher zur Speicherung im Verlaufe eines Dialogs für den Benutzer ermittelter Emotionsindikatoren,
g) Mittel (6) zur Evaluation des Erfolgs einer auf eine Dialogeingabe des Benutzers ausgewählten Strategie und zur Beeinflussung des Regelwerks in Abhängigkeit des Ergebnisses dieser Evaluation, durch einen Vergleich der im Verlauf des Dialogs ermittelten Emotionsindikatoren und eine Erhöhung oder Erniedrigung der Gewichtung einer Dialogstrategie auf der Grundlage des im Zuge des Vergleichs festgestellten Erfolgs ihrer Auswahl.

10. Automatisches Dialogsystem nach Anspruch 9, ausgebildet als automatisches Sprachdialogsystem, **dadurch gekennzeichnet, dass** diese über eine Sprachanalyseeinheit für die inhaltliche Analyse und über eine Einheit (1, 2) zur prosodischen Klassifizierung für die Ableitung des Emotionsindikators aus dem Sprachsignal einer Dialogeingabe verfügt.

## Claims

1. Method for dialog control in automatic dialog systems in which the dialog takes place on the basis of a content analysis of dialog inputs of a user of the dialog system, a correspondence identified in this process between the content of a particular dialog input and one of several operating commands predefined for the use of the dialog system, and the dialog responses corresponding to the relevant operating command in the system that are output to the user by said system, wherein a stock dialog response is output if applicable for each dialog input for which no correspondence can be identified, and wherein a dialog system designed for the purpose carries out content analysis of each dialog input received by the system and additionally carries out an evaluation of said dialog input with regard to identifying a current emotional state of the user, **characterized in that** a dialog strategy is selected on the basis of an emotion indicator obtained in the identification of the emotional state with the aid of a set of rules stored in the system for that purpose, and a dialog response provided as part of this dialog strategy for the applicable dialog step is output, wherein the system outputs a dialog response corresponding to the current dialog step and the applicable identified content of the user's dialog input in the case that the user is not considered emotionally agitated on the basis of the emotion indicator or in the case that a dialog strategy that ignores his emotional state is chosen, while otherwise the system outputs a dialog response corresponding to the current dialog step and the emotion indicator, and wherein the selection of the particular dialog strategy takes place as a function of the most recently determined emotion indicator by means of a random event generator that selects the dialog strategy from among dialog strategies contained in the set of rules for this emotion indicator, which dialog strategies enter into the result generated by the random event generator with a probability that is determined by a weighting assigned to the dialog strategies in the set of rules, and wherein, moreover, the success of the particular dialog strategy chosen is evaluated as part of the emotional analysis of the user's dialog input following the output of a dialog response by means of a comparison of the emotion indicators identified in each case, and the result of this evaluation is used to influence the set of rules **in that** the most recently selected dialog strategy has its weighting increased if it was successful or decreased if not.

2. Method according to claim 1, **characterized in that** the progress of the dialog as a whole and the emotion indicators determined in the individual dialog steps are logged, and the dialog strategies used during the dialog are weighted on the basis of the progress of the emotional agitation of the user identified in this process.

3. Method according to claim 1 or 2, **characterized in that** a minimum and a maximum weighting are established for each dialog strategy contained in the set of rules.

4. Method according to any one of claims 1 through 3, **characterized in that** an initial value is established for each dialog strategy contained in the set of rules during the course of a first initialization of the system.

5. Method according to any one of claims 1 through 4, **characterized in that** a stock dialog response is also output in the event that no new dialog input from the user is registered within a time period defined for the dialog system following the output of a dialog response that does not constitute the termination of a dialog.

6. Method according to claim 1 or 5, **characterized in that** the stock dialog response is an offer to enter a help dialog or is the direct output of help information.

7. Method according to any one of claims 1 through 6 for dialog control in an automatic voice dialog system, **characterized in that** the content of a user's dialog input made in the form of a spoken utterance is determined by semantic analysis thereof and the emotion indicator describing his emotional state at the time is determined by a prosodic classification of the voice signal of the dialog input.

8. Method according to claim 7, **characterized in that**, in order to describe the emotional state of a user of the voice dialog system derived from the voice dialog input, an emotion indicator between 0 and 1 is established, where 0 designates a state with no detectable emotional agitation, and 1 designates a state of very strong emotional agitation.

9. Automatic dialog system having: one or more units for content analysis of dialog inputs of a user; at least one content reference database in which are stored operating commands for the system or symbol-based data for the triggering thereof in relation to contents of dialog inputs permitted for operation of the system; a comparison unit by means of which the result of the content analysis of the dialog inputs is tested for correspondence to a data set in one of the content reference databases; a processing unit for processing operating commands derived on the basis of identified correspondences and for generating a dialog response corresponding to the current dialog step and the particular identified content of the user's dialog input; and at least one unit for output of a dialog response, **characterized in that** the dialog system has
a) an emotion reference value database (1),
b) means (2) for deriving an emotion indicator describing the current emotional state of the user from a dialog input of the user and with the use of the emotion reference value database (1),
c) a database (3) in which is stored a set of rules for selecting a dialog strategy as a function of an emotion indicator determined for a dialog input and a weighting factor for each of the dialog strategies that can be selected in accordance with the set of rules,
d) a unit (4) with a random event generator for selecting the dialog strategy from among dialog strategies contained in the set of rules for the identified emotion indicator, which dialog strategies enter into the result generated by the random event generator with a probability that is determined by their particular weighting factor,
e) means (5) for carrying out the strategy and generating a dialog response provided as part of the particular selected dialog strategy for the applicable dialog step,
f) a memory for storing emotion indicators identified for the user in the course of a dialog,
g) means (6) for evaluating the success of a strategy selected as a result of a dialog input of the user and for influencing the set of rules as a function of the result of this evaluation, by a comparison of the emotion indicators identified in the course of the dialog and an increase or decrease of the weighting of a dialog strategy on the basis of the success of its choice identified in the course of the comparison.

10. Automatic dialog system according to claim 9, designed as an automatic voice dialog system, **characterized in that** said system has a language analysis unit for content analysis and has a unit (1, 2) for prosodic classification for deriving the emotion indicator from the voice signal of a dialog input.

## Revendications

1. Méthode de commande de dialogue dans des systèmes de dialogue automatiques dans lesquels le dialogue s'effectue sur la base d'une analyse du contenu d'entrées de dialogue d'un utilisateur du système de dialogue, d'une correspondance ainsi obtenue entre le contenu d'une entrée de dialogue et une instruction de commande parmi plusieurs instructions de commande prédéfinies pour l'utilisation du système de dialogue, et de réponses de dialogue respectivement associées aux instructions de commande correspondantes dans le système et émises par ce dernier vers l'utilisateur, une réponse de dialogue stéréotypée étant émise, le cas échéant, à chacune des entrées de dialogue pour lesquelles aucune correspondance ne peut être obtenue, et un système de dialogue conçu à cet effet réalisant, outre l'analyse du contenu d'une entrée de dialogue reçue par le système, une évaluation de celle-ci pour déterminer l'état émotionnel instantané de l'utilisateur, **caractérisé en ce qu'**on choisit, à l'aide d'un ensemble de règles stocké dans le système à cet effet, une stratégie de dialogue sur la base d'un indicateur d'émotion obtenu lors de la détermination de l'état émotionnel, et **en ce qu'**on émet une réponse de dialogue prévue pour l'étape de dialogue respective dans le cadre de cette stratégie de dialogue, le système émettant une réponse de dialogue correspondant à l'étape de dialogue en cours et au contenu respectivement obtenu de l'entrée de dialogue de l'utilisateur, si l'utilisateur est considéré comme n'étant pas excité émotionnellement selon l'indicateur d'émotion ou si une stratégie de dialogue ignorant son état émotionnel est choisie et, dans le cas contraire, une réponse de dialogue correspondant à l'étape de dialogue en cours et à l'indicateur d'émotion étant émise, et le choix de la stratégie de dialogue respective en fonction du dernier indicateur d'émotion obtenu s'effectuant moyennant un générateur aléatoire qui choisit la stratégie de dialogue parmi des stratégies de dialogue contenues dans l'ensemble de règles pour cet indicateur d'émotion qui entrent dans le résultat généré par le générateur aléatoire, avec une probabilité déterminée par une pondération associée aux stratégies de dialogue contenues dans l'ensemble de règles, et la réussite de la stratégie de dialogue respectivement choisie étant évaluée dans le cadre de l'évaluation émotionnelle de l'entrée de dialogue de l'utilisateur qui fait suite à l'émission d'une réponse de dialogue par comparaison des indicateurs d'émotion respectivement obtenus, et le résultat de cette évaluation étant utilisé pour influer sur l'ensemble de règles en augmentant la pondération de la dernière stratégie de dialogue choisie si elle était réussie, ou en la diminuant dans le cas contraire.

2. Méthode selon la revendication 1, **caractérisée en ce que** la courbe du dialogue entier ainsi que les indicateurs d'émotion obtenus dans les différentes étapes de dialogue sont consignés et **en ce que** les stratégies de dialogue appliquées au cours du dialogue sont pondérées selon la courbe de l'excitation émotionnelle de l'utilisateur qui y a été relevée.

3. Méthode selon la revendication 1 ou 2, **caractérisée en ce qu'**une pondération minimale et une pondération maximale sont définies pour chacune des stratégies de dialogue contenues dans l'ensemble de règles.

4. Méthode selon l'une quelconque des revendications 1 à 3, **caractérisée en ce qu'**une valeur de départ est définie au cours d'une initialisation de départ du système pour chacune des stratégies de dialogue contenues dans l'ensemble de règles.

5. Méthode selon l'une quelconque des revendications 1 à 4, **caractérisée en ce qu'**une réponse de dialogue stéréotypée est émise également, dans le cas où aucune nouvelle entrée de dialogue de l'utilisateur n'est enregistrée pendant une durée définie pour le système de dialogue après l'émission d'une réponse de dialogue qui ne constitue pas la fin d'un dialogue.

6. Méthode selon la revendication 1 ou 5, **caractérisée en ce que**, dans le cas de la réponse de dialogue stéréotypée, il s'agit de la proposition d'entrée dans un dialogue d'aide ou de l'émission immédiate d'informations d'aide.

7. Méthode selon l'une quelconque des revendications 1 à 6 pour la commande de dialogue dans un système de dialogue vocal automatique, **caractérisée en ce qu'**elle consiste à relever le contenu d'une entrée de dialogue de l'utilisateur effectuée sous la forme d'un énoncé vocal par analyse sémantique de celui-ci et à déterminer l'indicateur d'émotion décrivant son état émotionnel par classification prosodique du signal vocal de l'entrée de dialogue.

8. Méthode selon la revendication 7, **caractérisée en ce que** pour décrire l'état émotionnel déduit de l'entrée de dialogue vocale d'un utilisateur du système de dialogue vocal, on détermine un indicateur d'émotion entre 0 et 1, 0 caractérisant un état sans excitation émotionnelle décelable et 1 caractérisant un état de très forte excitation émotionnelle.

9. Système de dialogue automatique comprenant une ou plusieurs unités d'analyse du contenu d'entrées de dialogue d'un utilisateur, au moins une base de données de référence de contenu dans laquelle sont stockées des instructions de commande du système ou des données à base de caractères destinées à leur déclenchement en relation avec des contenus d'entrées de dialogue autorisés pour la commande du système, une unité de comparateur par l'intermédiaire de laquelle on vérifie s'il existe des correspondances entre le résultat de l'analyse du contenu des entrées de dialogue et un enregistrement contenu dans l'une des base de données de référence de contenu, une unité de traitement destinée à traiter des instructions de commande déduites selon des correspondances obtenues et à générer une réponse de dialogue correspondant à l'étape de dialogue en cours et au contenu respectivement obtenu de l'entrée de dialogue de l'utilisateur, ainsi qu'au moins une unité d'émission d'une réponse de dialogue, **caractérisé en ce que** le système de dialogue comporte :
a) une base de données de valeurs de référence d'émotion (1),
b) des moyens (2) pour déduire un indicateur d'émotion décrivant l'état émotionnel instantané de l'utilisateur d'une entrée de dialogue de l'utilisateur, et en recourant à la base de données de valeurs de référence d'émotion (1),
c) une base de données (3) contenant un ensemble de règles pour le choix d'une stratégie de dialogue en fonction d'un indicateur d'émotion obtenu pour une entrée de dialogue et un facteur de pondération pour chacune des stratégies de dialogue proposées au choix selon l'ensemble de règles,
d) une unité (4) dotée d'un générateur aléatoire pour le choix de la stratégie parmi les stratégies de dialogue contenues dans l'ensemble de règles pour l'indicateur d'émotion obtenu, qui entrent dans le résultat généré par le générateur aléatoire avec une probabilité d'intégration déterminée par leur facteur respectif de pondération,
e) des moyens (5) destinés à exécuter la stratégie et à générer une réponse de dialogue prévue pour l'étape de dialogue respective dans le cadre de la stratégie de dialogue respectivement choisie,
f) une mémoire destinée à mémoriser les indicateurs d'émotion obtenus pour l'utilisateur au cours d'un dialogue,
g) des moyens (6) destinés à évaluer la réussite d'une stratégie choisie en fonction d'une entrée de dialogue de l'utilisateur et à influer sur l'ensemble de règles en fonction du résultat de cette évaluation par une comparaison des indicateurs d'émotion obtenus au cours du dialogue et une augmentation ou une diminution de la pondération d'une stratégie de dialogue sur la base de la réussite de leur choix constatée lors de la comparaison.

10. Système de dialogue automatique selon la revendication 9, réalisé sous la forme d'un système de dialogue vocal automatique, **caractérisé en ce qu'**il dispose d'une unité d'analyse vocale destinée à analyser un contenu et d'une unité (1, 2) destinée à la classification prosodique pour la déduction de l'indicateur d'émotion du signal vocal d'une entrée de dialogue.
